# EUROPÄISCHE PATENTSCHRIFT

(11) **EP 2 176 631 B1**
(45) Veröffentlichungstag und Bekanntmachung des Hinweises auf die Patenterteilung: **03.08.2016**
(21) Anmeldenummer: 08784254.8
(22) Anmeldetag: 27.06.2008
(51) Int. Cl.: G01K 11/12, G02B 7/18

(54) **ÜBERWACHUNG DER TEMPERATUR EINES OPTISCHEN ELEMENTS**
MONITORING THE TEMPERATURE OF AN OPTICAL ELEMENT
SURVEILLANCE DE LA TEMPÉRATURE D'UN ÉLÉMENT OPTIQUE

(30) Priorität: 29.06.2007 DE 102007030398
(43) Veröffentlichungstag der Anmeldung: 21.04.2010
(73) Patentinhaber: Trumpf Laser- und Systemtechnik GmbH, 71254 Ditzingen (DE)
(72) Erfinder: SCHULZ, Joachim, 70839 Gerlingen (DE)
(74) Vertreter: Kohler Schmid Möbus Patentanwälte
(86) Internationale Anmeldenummer: PCT/DE2008/001053
(87) Internationale Veröffentlichungsnummer: WO 2009/003449

(56) Entgegenhaltungen:
- EP-A- 1 398 612
- WO-A-2005/030433
- DE-C1- 19 839 930
- JP-A- 59 030 032
- JP-A- 59 082 184
- GRIGORY ADAMOVSKY ET AL: "Fiber-optic thermometer using temperature dependent absorption, broadband detection, and time domain referencing", APPLIED OPTICS,, vol. 25, no. 23, 1 December 1986 (1986-12-01), pages 4439-4443, XP001412907,

## Beschreibung

Die vorliegende Erfindung betrifft eine Anordnung, umfassend: eine Laserstrahlquelle zur Erzeugung eines Laserstrahls mit einer Laserwellenlänge λ_{L} im infraroten Wellenlängenbereich, bevorzugt von mehr als 2 µm, insbesondere bei λ_{L} = 10,6 µm, und bevorzugt bei einer Leistungsdichte von 1 kW/cm² oder darüber, ein im Strahlengang des Laserstrahls angeordnetes, für Strahlung bei der Laserwellenlänge λ_{L} im Infrarot-Bereich transmissives oder teiltransmissives optisches Element, sowie eine Vorrichtung zum Überwachen der Temperatur und/oder einer temperaturabhängigen Kenngröße, insbesondere des Brechungsindex oder der Wärmeleitfähigkeit, des optischen Elements. Die Erfindung betrifft auch ein Verfahren zum Überwachen der Temperatur und/oder einer temperaturabhängigen Kenngröße, insbesondere des Brechungsindex oder der Wärmeleitfähigkeit, eines im Strahlengang eines Laserstrahls angeordneten, für Strahlung bei einer Laserwellenlänge λ_{L} im Infrarot-Bereich transmissiven oder teiltransmissiven optischen Elements. Besondere Anwendung findet die Erfindung bei Infrarot-Gaslasern, speziell bei CO₂-Gaslasern mit einer Laserwellenlänge λ_{L} von 10,6 µm.

Die Aufgaben eines Strahlführungs- und Strahlformungssystems an einer CO₂-Hochleistungslaseranlage bestehen in einer möglichst leistungs- und qualitätsverlustfreien Führung des Laserstrahls und dessen Formung zur gewünschten Leistungsdichteverteilung am Bearbeitungsort. Bei der Auswahl der optischen Elemente sind die besonderen Anforderungen der infraroten CO₂-Wellenlänge und die hohen Leistungsdichten zu berücksichtigen. Aufgrund der langen Wellenlänge > 2µm erfolgt die Strahlführung überwiegend in freier Strahlpropagation über reflektierende, transmittierende und teiltransmittierende optische Elemente und nicht über optische Glasfasern, da die Dämpfungsverluste zu groß sind. Für viele Anwendungen besteht die Möglichkeit, sowohl reflektierende als auch transmissive bzw. teiltransmissive optische Elemente einzusetzen.

Bei Leistungsdichten oberhalb von 1-2 kW/cm² werden bevorzugt reflektierende optische Elemente eingesetzt, da sie höhere Zerstörschwellen besitzen und sich wegen der effektiveren Kühlmöglichkeiten über die Rückseite der optischen Elemente weniger stark thermisch verformen. Transmissive und teiltransmissive optische Elemente haben den Nachteil, dass eine Kühlung nur über den Rand der optischen Elemente erfolgen kann, während bei reflektierenden optischen Elementen eine gleichmäßige Kühlung über die Rückseite des optischen Elementes erfolgen kann. Eine ungleichmäßige Bestrahlung eines optischen Elementes mit einem Maximum auf der optischen Achse und die Kühlung über die Fassung am Rand des optischen Elementes bewirken eine stark inhomogene, in der Mitte des optischen Elementes konzentrierte thermische Belastung. Gegenüber transmissiven besitzen reflektierende optische Elemente den Nachteil der größeren Justierempfindlichkeit. Außerdem sind transmissive bzw. teiltransmissive optische Elemente, wie z.B. Linsen, Strahlteiler und Auskoppelspiegel, als Abschluss- und Schutzfenster von Arbeitsgasräumen und zur Strahlein- und Strahlauskopplung unverzichtbar, da Alternativen, wie z.B. aero-dynamische Fenster, vergleichsweise aufwändig sind.

Bei der infraroten Wellenlänge eines CO₂-Laserstrahls von 10,6 µm stehen nur wenige optische Werkstoffe für transmissive optische Elemente zur Verfügung. Für transmissive optische Elemente wird überwiegend Zinkselenid (ZnSe) verwendet. Vorteilhaft sind bei diesem Material vor allem der kleine Absorptionskoeffizient und die geringe Temperaturabhängigkeit des Brechungsindex. Im Vergleich zu Zinkselenid besitzt Galliumarsenid (GaAs) einen höheren Absorptionskoeffizienten, der jedoch durch eine bessere Wärmeleitfähigkeit und mechanische Festigkeit kompensiert wird. Als weitere optische Werkstoffe für transmissive optische Elemente werden Quarz, BK7-Glas und Germanium eingesetzt.

Absorption von Laserstrahlung an optischen Elementen ist unvermeidbar und vor allem für transmissive und teiltransmissive optische Elemente von Bedeutung. Ein einfallender Laserstrahl wird im Grundwerkstoff des optischen Elementes, in den Beschichtungen und an Verunreinigungen im und auf dem optischen Element absorbiert und führt zu einer Erwärmung des optischen Elementes und einer Veränderung der optischen Kenngrößen (Brechungsindex, Wärmeleitfähigkeit etc.). Staubpartikel oder sonstige Verschmutzungen, wie z.B. Abrieb, die in einem Strahlführungsraum vorhanden sind, können sich an der Oberfläche der optischen Elemente ablagern und zu einer verstärkten Absorption des auftreffenden Laserstrahls und damit zu einer zusätzlichen Erwärmung der optischen Elemente führen.

Da das Strahlführungs- und Strahlformungssystem einen großen Einfluss auf das Bearbeitungsergebnis hat, stellt die Absorption eine wesentliche Fehlerquelle dar. Diese kann durch die Herstellung hochreiner Optikwerkstoffe, durch eine Kühlung der optischen Elemente und regelmäßige Wartung im Einsatz eingeschränkt werden. Überwachungssysteme bieten die Möglichkeit zur frühzeitigen Entdeckung von Fehlern und zur Verringerung der Standzeiten optischer Elemente.

Unter dem Begriff "thermischer Linseneffekt" werden im Folgenden alle Auswirkungen der Absorption auf ein optisches Element verstanden, die eine Änderung der optischen Kenngrößen und eine Verschlechterung der Strahlqualität nach sich ziehen. Dabei sind zwei Phänomene zu unterscheiden: Thermischer Weglaufeffekt ("Thermal Runaway") und thermisch-optische Verformung. Der thermische Weglaufeffekt beruht auf einer exponentiellen Zunahme des Absorptionskoeffizienten mit der Temperatur, was zur Folge hat, dass oberhalb einer Grenztemperatur mehr Energie absorbiert wird, als über die Kühlung abgeführt werden kann. Eine stetige Erwärmung mit zunehmender Absorption würde letztlich zu einer Zerstörung des optischen Elementes führen. Da eine stark erhöhte Absorption mit einer schlechteren optischen Qualität verbunden ist, lässt sich die Gefahr des thermischen Weglaufeffektes meist frühzeitig erkennen und vermeiden. Unter thermisch-optischer Verformung werden eine geometrische Verformung des optischen Elementes aufgrund der temperaturabhängigen Volumenausdehnung und eine Änderung des Brechungsindex verstanden.

Der Brechungsindex n ist eine temperaturabhängige Eigenschaft von optischen Elementen. Aufgrund dieser Temperaturabhängigkeit führt eine räumlich inhomogene Temperaturverteilung in einem optischen Element dazu, dass ein auftreffender Laserstrahl unterschiedlich stark gebrochen wird. Bei optischen Materialien ist zwischen Materialien mit einem positiven Brechungsindexgradienten (dn/dT>0) und Materialien mit einem negativen Brechungsindexgradienten (dn/dT<0) zu unterscheiden. Bei einem planen optischen Element führen eine Temperaturverteilung mit einem Maximum auf der optischen Achse (z.B. gaußförmige Temperaturverteilung) und ein positiver Brechungsindexgradient zu einer Fokussierung des auftreffenden Laserstrahls, ein negativer Brechungsindexgradient erzeugt dagegen eine Aufweitung des Laserstrahls. Ein fokussierendes optisches Element erzeugt einen Laserstrahlverlauf mit einem kleinsten Strahldurchmesser (Strahltaille) im Brennpunkt des optischen Elements, hinter der Strahltaille nimmt der Strahldurchmesser zu. Eine Erwärmung des optischen Elements führt bei einem positiven Brechungsindexgradienten dazu, dass sich der Strahldurchmesser im Bereich vom optischen Element bis zur Strahltaille und kurz dahinter gegenüber einem kalten optischen Element verringert, wohingegen sich der Strahldurchmesser in Abständen, die groß gegen die Brennweite des optischen Elements sind, gegenüber einem kalten optischen Element vergrößert. Ein negativer Brechungsindexgradient führt bei einem erwärmten optischen Element zum gegenteiligen Effekt, d.h. der Strahldurchmesser im Bereich vom optischen Element bis zur Strahltaille und kurz dahinter erhöht sich gegenüber einem kalten optischen Element, wohingegen sich der Strahldurchmesser in Abständen, die groß gegen die Brennweite des optischen Elements sind, verringert.

Zinkselenid und Galliumarsenid weisen temperaturabhängige Wärmeleitfähigkeiten und Brechungsindices sowie positive Brechungsindexgradienten (dn/dT>0) auf, die dazu führen, dass sich die Brechkraft eines optischen Elementes und damit die Fokussiereigenschaften mit der Temperatur ändern. Bei hohen Temperaturen sinkt die Wärmeleitfähigkeit, was zu steileren Temperaturgradienten bei steigenden Temperaturen führt, da die Wärme schlechter abgeführt wird. Der steilere Temperaturgradient führt aufgrund des positiven Brechungsindexgradienten für Zinkselenid und Galliumarsenid zu einer erhöhten Brechkraft und damit zu einer veränderten Ausbreitung des Laserstrahls hinter dem optischen Element im Vergleich zu einem kalten optischen Element. Den höchsten thermischen Belastungen sind teiltransmissive Auskoppeloptiken, die den Laserstrahl aus dem Laserresonator auskoppeln, und Fokussierlinsen ausgesetzt.

Die EP-A-1 398 612 beschreibt eine Vorrichtung zur Überwachung der Funktionalität eines optischen Elementes und eignet sich besonders für teiltransmissive optische Elemente, wie z.B. Auskoppelspiegel von Laserresonatoren. Die Überwachungsvorrichtung umfasst einen Detektor und eine Lichtquelle, deren Messstrahlung von der dem Detektor und der Lichtquelle zugewandten Oberfläche des optischen Elementes zumindest teilweise reflektiert wird. Ein Teil der Messstrahlung wird vom Detektor als reflektierter Messstrahl erfasst. Die Lichtquelle und der Detektor liegen einander bzgl. des überwachten optischen Elementes diametral gegenüber und sind insbesondere unter dem gleichen Winkel und seitlich zum optischen Element angeordnet.

Die DE-C 198 39 930 beschreibt ein Verfahren zur Überwachung der Funktionalität eines transmissiven Schutzelementes einer für die Laserwellenlänge transmissiven Laseroptik sowie eine Einrichtung zur Durchführung dieses Verfahrens. Aufgabe ist es, ein Verfahren bzw. eine Einrichtung zur Überwachung der Funktionalität eines transmissiven Schutzelementes einer transmissiven Laseroptik so auszugestalten, dass insbesondere Rissbildungen oder Zerstörungen des Schutzelementes zuverlässig erfasst werden können. Die Überwachungseinrichtung umfasst einen an die Seitenfläche des Schutzelementes angekoppelten Detektor, der aus der Seitenfläche austretendes Licht erfasst, und eine Lichtquelle, die an die Seitenfläche angekoppelt ist und mit dem Detektor als Lichtschranke zusammenwirkt. Die Messstrahlung der Lichtquelle wird in einer zur Einfallsrichtung des Laserstrahls schrägen Richtung in das Schutzelement eingekoppelt und durchquert das Schutzelement. Ein Teil der Messstrahlung wird nach Durchqueren des Schutzelementes vom Detektor als transmittierter Messstrahl erfasst. Zur Temperaturüberwachung des transmissiven Schutzelementes sind Strahlungstemperatursensoren vorgesehen, welche die lokale Temperatur in unterschiedlichen Bereichen des Schutzelementes überwachen sollen, indem die von dem Schutzelement ausgehende Wärmestrahlung detektiert wird. Durch unterschiedliche Arten von Strahlungstemperatursensoren kann zwischen langsamen und schnellen Temperaturänderungen differenziert werden. Jedoch hängt die von einem transmissiven Körper ausgesandte Wärmestrahlung zwar auch von Volumenteilen im Inneren des optischen Elements ab, wird aber in einem hohen Maße von der Oberflächentemperatur bestimmt, weshalb eine Bestimmung der Temperatur insbesondere im Inneren des optischen Elements anhand der von den Strahlungssensoren gelieferten Daten nur schwer möglich ist.

Die JP 59 030032 A beschreibt ein Thermometer, bei dem eine doppelbrechende Faser als Temperatur-Sensor verwendet wird. Für die Temperaturmessung wird die Phase eines durch die Faser hindurch tretenden Signals digital detektiert, wobei anhand der detektierten Phase auf eine Veränderung einer temperaturabhängigen optischen Eigenschaft der optischen Faser geschlossen werden kann.

Der Artikel "Fiber-optic thermometer using temperature dependent absorption, broadband detection, and time domain referencing", Applied Optics, Bd. 25, Nr. 23, 1986, Seiten 4439-4443, beschreibt ebenfalls ein faseroptisches Thermometer, bei dem ein von einer LED-Lichtquelle erzeugter Lichtpuls in eine mit Nd³⁺-Ionen dotierte Glasfaser eingekoppelt wird. Die Leistung des Lichtpulses wird durch die temperaturabhängige Absorption des Nd³⁺-Ions in der Glasfaser moduliert. Beim Durchlaufen der Glasfaser bzw. einer aus dieser gebildeten Schleife wird aus dem Puls eine Pulsfolge erzeugt, die mittels eines Lawinen-Photodetektors detektiert wird.

### Aufgabe der Erfindung

Aufgabe der vorliegenden Erfindung ist es, eine Anordnung und ein Verfahren der eingangs genannten Art bereitzustellen, welche eine schnelle, bevorzugt lokale Überwachung der Temperatur bzw. temperaturabhängiger Kenngrößen und insbesondere von deren zeitlicher Änderung an einem optischen Element erlauben.

### Gegenstand der Erfindung

Diese Aufgabe wird erfindungsgemäß gelöst durch eine Anordnung der eingangs genannten Art mit der Vorrichtung, die mindestens eine Messlichtquelle zum Erzeugen und Aussenden von Messstrahlung auf das optische Element, mindestens einen Detektor zum Detektieren zumindest eines Teils der durch das optische Element hindurch getretenen Messstrahlung, sowie eine mit dem Detektor in Verbindung stehende Auswerteeinrichtung aufweist, welche die der Intensität der detektierten Messstrahlung zugeordnete Temperatur und/oder temperaturabhängige Kenngröße in einem Durchtrittsbereich der Messstrahlung anhand einer vorgegebenen, auf der temperaturabhängigen Absorption des transmissiven oder teiltransmissiven optischen Elements in dem Durchtrittsbereich beruhenden Beziehung zwischen der Intensität der detektierten Messstrahlung und der Temperatur und/oder der temperaturabhängigen Kenngröße in dem Durchtrittsbereich überwacht, wobei die mindestens eine Messlichtquelle zur Erzeugung von Messstrahlung bei einer Messwellenlänge λ_{M} oder in einem Messwellenlängenbereich λ_{M} ± Δλ ausgelegt ist, welche bzw. welcher sich von der Laserwellenlänge λ_{L} unterscheidet.

Erfindungsgemäß wird vorgeschlagen, über die gemessene Intensität der durch das optische Element hindurch getretenen Messstrahlung auf die Temperatur bzw. temperaturabhängige optische Kenngrößen des optischen Elements zu schließen. Dies ist möglich, weil die Absorption des optischen Materials des optischen Elements in dem Durchtrittsbereich temperaturabhängig ist, so dass die Intensität der detektierten Messstrahlung von der Temperatur abhängt. Aus einer vorgegebenen, d.h. vorher ermittelten und in der Auswerteeinrichtung hinterlegten Beziehung zwischen der Intensität und der Temperatur bzw. der oder den temperaturabhängigen Kenngrößen lässt sich daher der momentane Betriebszustand des optischen Elements nahezu instantan ermitteln, so dass rasch auf Veränderungen reagiert werden kann und ggf. Korrekturmaßnahmen eingeleitet werden können, z.B. wenn erkannt wird, dass aufgrund der Temperaturänderung eine Brechzahländerung eingetreten ist, welche bei einem als Fokussierlinse oder Auskoppelspiegel dienenden optischen Element zu einer Fokusverschiebung führt.

Die Temperatur bzw. die temperaturabhängige Kenngröße wird bei der Messung als integrale Information über die Länge des Durchtrittsbereichs erhalten. Der Detektor ist hierbei bevorzugt derart angeordnet, ausgerichtet und dimensioniert, dass er die gesamte in einem jeweiligen Durchtrittsbereich durch das optische Element hindurch tretende Messstrahlung detektiert. Es versteht sich, dass in der Regel sowohl die Messlichtquelle als auch der Detektor außerhalb des Strahlengangs des Laserstrahls angeordnet sind.

Die Anordnung weist eine Laserstrahlquelle zur Erzeugung eines Laserstrahls mit einer Laserwellenlänge λ_{L} im infraroten Wellenlängenbereich, bevorzugt bei mehr als 2 µm, insbesondere bei λ_{L} = 10,6 µm, und bevorzugt bei einer Leistungsdichte von 1 kW/cm² oder darüber auf. Ein im Strahlengang einer solchen Laserstrahlquelle angeordnetes optisches Element wird besonders stark thermisch beansprucht, so dass eine Überwachung der Temperatur bzw. temperaturabhängiger Kenngrößen und insbesondere von deren lokalen Unterschieden geboten ist.

Die Messlichtquelle ist zur Erzeugung von Messstrahlung bei einer Messwellenlänge λ_{M} oder einem Messwellenlängenbereich λ_{M} ± Δλ ausgelegt, welche bzw. welcher sich von der Laserwellenlänge λ_{L} unterscheidet. Durch die unterschiedlichen Wellenlängen der Messstrahlung und der Laserstrahlung kann bei Verwendung eines wellenlängenselektiven Detektors die Detektion der Messstrahlung ohne den störenden Einfluss von an dem optischen Element gestreuter und auf den Detektor treffender Laserstrahlung erfolgen. Es versteht sich, dass die Messwellenlänge λ_{M} oder der Messwellenlängenbereich λ_{M} ± Δλ hierbei derart gewählt sind, dass das optische Element auch für die Messstrahlung transmissiv bzw. teiltransmissiv ist.

Bei einer weiteren bevorzugten Ausführungsform ist die Messlichtquelle zur Erzeugung von Messstrahlung bei einer Messwellenlänge λ_{M} ausgelegt, bei der eine relative Abweichung |λ_{M} - λₘₐₓ|/ λₘₐₓ zu einer Wellenlänge λₘₐₓ, bei der die Änderung der Transmission des optischen Elements in Abhängigkeit von der Temperatur maximal ist, bei nicht mehr als 10 %, bevorzugt bei nicht mehr als 5 % liegt. In diesem Fall ist die Messlichtquelle zur Erzeugung von Messstrahlung ausgelegt, deren Spektrum an der Messwellenlänge λ_{M} konzentriert ist.

Alternativ kann die mindestens eine Messlichtquelle auch zur Erzeugung von Messstrahlung in einem Messwellenlängenbereich λ_{M} ± Δλ ausgelegt sein, wobei dieser Bereich von einer Wellenlänge λₘₐₓ, bei der die Änderung der Transmission des optischen Elements in Abhängigkeit von der Temperatur maximal ist, um nicht mehr als 10 %, bevorzugt um nicht mehr als 5 %, abweicht. In diesem Fall wird eine breitbandige Messlichtquelle verwendet, bspw. eine LED, deren Spektrum sich über einen Spektralbereich λ_{M} ± Δλ erstreckt, welcher vollständig in einem Intervall λₘₐₓ ± 10% bzw. λₘₐₓ ± 5% liegt. Aus diesem Spektrum kann der Detektor zur Bestimmung der Intensität einen geeigneten Messbereich herausfiltern.

In beiden oben beschriebenen Fällen kann eine hohe Sensitivität der Messung für Änderungen der Temperatur bzw. der temperaturabhängigen Kenngrößen erzielt und damit die Reaktionszeit zur Einleitung von Gegenmaßnahmen verringert werden. Bei den typischerweise für transmissive oder teiltransmissive optische Elemente bei Laserwellenlängen im Infrarotbereich verwendeten Substratmaterialien ist die Wellenlänge der maximalen Transmissionsänderung wie folgt definiert: Bei Zinkselenid (ZnSe) liegt die Wellenlänge bei λₘₐₓ = 520 nm, bei Germanium bei λₘₐₓ = 2 µm, bei Galliumarsenid bei λₘₐₓ = 1000 nm, bei BK7-Glas bei λₘₐₓ = ca. 330 nm und bei Quarzglas liegt diese Wellenlänge je nach den Materialeigenschaften des Glases zwischen 170 und 240 nm oder zwischen 2,5 µm und 4 µm. Die Messwellenlänge λ_{M} bzw. der Messwellenlängenbereich λ_{M} ± Δλ für das jeweilige Material sollte möglichst dicht bei den oben genannten Wellenlängen liegen, wobei bei der Einstrahlung von Messstrahlung auf mit Antireflex- oder Teilreflex-Beschichtungen versehenen Oberflächen der optischen Elemente ggf. deren wellenlängenabhängiger Einfluss zu berücksichtigen ist, da diese die Wellenlänge der maximalen Transmissionsänderung ggf. verändern.

Bei einer bevorzugten Ausführungsform ist zur Temperaturüberwachung eines optischen Elements, welches zumindest im Durchtrittsbereich der Messstrahlung aus Zinkselenid besteht, die Messlichtquelle zur Erzeugung von Messstrahlung bei einer Messwellenlänge λ_{M} zwischen 510 nm und 535 nm, bevorzugt bei 532 nm oder in einem Messwellenlängenbereich λ_{M} ± Δλ im Bereich 520 nm ± 52 nm, bevorzugt 520 nm ± 26 nm ausgelegt. Dieser Wellenlängenbereich liegt in der Nähe der maximalen Änderung der Transmission an der Absorptionskante von Zinkselenid. Die Messwellenlänge von 532 nm ist besonders bevorzugt, weil Messstrahlung bei dieser Wellenlänge auf besonders einfache Weise durch eine kommerziell erhältliche Laserdiode erzeugt werden kann. Als Messlichtquellen können auch breitbandige LEDs eingesetzt werden, die Messstrahlung in einem Wellenlängenbereich von λ_{M} ± Δλ um λₘₐₓ = 520 nm erzeugen.

Bei einer vorteilhaften Ausführungsform sendet die Messlichtquelle Messstrahlung auf eine nicht im Strahlengang des Laserstrahls angeordnete, typischerweise zylindrisch umlaufende Seitenfläche des optischen Elements aus. Die Messstrahlung durchstrahlt in diesem Fall das optische Element quer oder nahezu quer zur Haupt-Ausbreitungsrichtung des Laserstrahls. Bei dieser, im Folgenden auch als radiale Durchleuchtung bezeichneten Messmethode steht bei den typischen Ausdehnungen von optischen Elementen quer zum Laserstrahl von ca. 20 - 50 mm bei den vorliegenden Anwendungen eine besonders große Absorptionslänge zur Verfügung, so dass eine temperaturabhängige Transmissionsänderung einfach erkannt werden kann. Aufgrund der integralen Information über die dem Durchmesser des optischen Elements entsprechende Durchtrittslänge kann ein einziges Intensitätssignal für die Temperaturüberwachung des optischen Elements ausreichend sein. An den Bereichen des Strahleintritts bzw. Strahlaustritts der Messstrahlung wird der üblicherweise mattierte Seitenrand des optischen Elements poliert. Um die Absorptionslänge weiter zu erhöhen, kann die Messstrahlung zwischen dem Strahleintritt und dem Strahlaustritt zusätzlich ein- oder mehrmals am Seitenrand des optischen Elements zumindest teilweise reflektiert werden. Um den reflektierten Anteil der Messstrahlung zu erhöhen, kann der Seitenrand an den entsprechenden Stellen mit einer reflektierenden Beschichtung versehen sein oder ggf. ein Einfallswinkel der Messstrahlung auf den Rand des optischen Elements gewählt werden, welcher eine Totalreflexion der Messstrahlung erlaubt.

Bei einer weiteren vorteilhaften Ausführungsform umfasst die Vorrichtung eine Halterung für das optische Element, in welcher mindestens eine Messlichtquelle und/oder mindestens ein Detektor integriert sind. Hierdurch wird eine kompakte Messanordnung realisiert, welche ideal für die radiale Durchleuchtung geeignet ist, da der Detektor und die Messlichtquelle in unmittelbarer Nähe zum optischen Element seitlich zu diesem angeordnet und zusätzlich durch die Halterung vor der Laserstrahlung geschützt sind.

Bei einer bevorzugten Ausführungsform sendet mindestens eine Messlichtquelle Messstrahlung auf eine zumindest teilweise im Strahlengang des Laserstrahls angeordnete optische Oberfläche des optischen Elements aus. In diesem Fall kann das optische Element nahezu parallel zur Haupt-Ausbreitungsrichtung des Hochleistungs-Laserstrahls durchleuchtet werden, was im Folgenden auch als axiale bzw. nahezu axiale Durchleuchtung bezeichnet wird. Die Messstrahlung tritt hierbei an denselben optischen Oberflächen wie der Laserstrahl in das optische Element ein und wieder aus. Die Messstrahlung kann hierbei bevorzugt gerichtet und nahezu parallel zur Hauptausbreitungsrichtung des Laserstrahls auf das optische Element ausgesendet werden, so dass die detektierte, integrale Intensität in dem Durchtrittsbereich durch das optische Element im Wesentlichen von der Absorption in einem Punkt des optischen Elements abhängt, an welchem die Temperatur bestimmt werden kann. Insbesondere ist es hierbei vorteilhaft, den zentralen Bereich eines optischen Elements in der Nähe von deren Symmetrieachse zu durchleuchten, weil an diesem die Temperatur des optischen Elements wegen der am Rand erfolgenden Kühlung besonders hoch ist.

Die auf den optischen Oberflächen in der Regel aufgebrachten Antireflex-Beschichtungen bestehen in der Regel aus einem Mehrfachschichtsystem mit einer Anzahl von alternierenden Schichten mit hohem und niedrigem Brechungsindex, um durch Interferenzeffekte die Reflexion von Strahlung bei der Laserwellenlänge zu unterbinden. Solche Antireflex-Beschichtungen weisen in der Regel eine stark modulierte Wellenlängenabhängigkeit für Strahlung im sichtbaren Bereich auf, stören hierbei die Messung aber nicht und können ggf. ausgenutzt werden, wenn relative Änderungen der Transmission bzw. der Temperatur überwacht werden sollen, da diese die Temperaturabhängigkeit der Transmission verstärken können.

Bei einer weiteren besonders bevorzugten Ausführungsform ist/sind mindestens eine weitere Messlichtquelle und/oder mindestens eine Strahlteilereinrichtung für die Strahlung der Messlichtquelle(n) vorgesehen, um Messstrahlung gerichtet an mindestens zwei Punkte einer Oberfläche des optischen Elements auszusenden. Hierdurch kann bei einer axialen Messung an mehreren Punkten des Feldes lokal die Temperatur des optischen Elements bestimmt werden bzw. bei einer radialen Messung Temperaturgradienten in dem optischen Element ermittelt werden.

Bei einer bevorzugten Ausführungsform ist mindestens eine Messlichtquelle zur Erzeugung von Messstrahlung in einem divergierenden Lichtbündel ausgelegt. In diesem Fall kann die Temperatur bzw. die temperaturabhängige Kenngröße an einer Mehrzahl von Stellen des optischen Elements bestimmt werden, wenn die Intensität der hindurch getretenen Messstrahlung mit einer entsprechenden Mehrzahl von Detektoren oder mit einem Flächendetektor ermittelt wird.

Bei einer besonders bevorzugten Ausführungsform ist mindestens ein Detektor ein Flächendetektor, bevorzugt eine CCD-Kamera. Unter einem Flächendetektor wird ein Detektor verstanden, welcher eine ortsaufgelöste Information der detektierten Intensität der Messstrahlung liefert. Mittels einer geeigneten Kalibrierung der Intensitätsverteilung kann die thermische Linse des optischen Elements in diesem Fall über einen großen Bereich, bevorzugt das gesamte Feld des optischen Elements überwacht werden.

Bei einer besonders vorteilhaften Ausführungsform ist die Auswerteeinrichtung ausgelegt, durch Vergleich der Intensität von in einem ersten Durchtrittsbereich durch das optische Element hindurch getretener Messstrahlung mit der Intensität von in einem zweiten Durchtrittsbereich durch das optische Element hindurch getretener Messstrahlung einen Temperaturgradienten und/oder einen Gradienten einer temperaturabhängigen Kenngröße in dem optischen Element zu ermitteln. Die Einleitung von Gegenmaßnahmen kann in diesem Fall erfolgen, wenn ein bestimmter Schwellwert für den Gradienten der Temperatur bzw. der temperaturabhängigen Kenngröße überschritten wird.

Bei einer besonders vorteilhaften Ausführungsform weist die Vorrichtung eine Regeleinrichtung zur Temperaturregelung des optischen Elements auf eine vorgebbare Betriebstemperatur und eine von der Regeleinrichtung gesteuerte Kühleinrichtung zum Kühlen des optischen Elements auf. Auf die oben beschriebene Weise kann die Ist-Temperatur des optischen Elements ermittelt und mittels der Kühleinrichtung auf die Soll-Temperatur geregelt werden. Als Kühleinrichtung können Kanäle in der Fassung des optischen Elements vorgesehen sein, durch welche eine Kühlflüssigkeit hindurchströmt. Alternativ können auch elektrische Kühlelemente, z.B. Peltier-Elemente, zum Einsatz kommen.

Bei einer besonders bevorzugten Ausführungsform weist die Vorrichtung eine Regeleinrichtung zur Regelung der Fokuslage des mittels mindestens eines adaptiven Spiegels fokussierbaren Laserstrahls auf, wobei zur Regelung der Fokuslage die fokussierenden Eigenschaften des adaptiven Spiegels von der Regeleinrichtung gesteuert werden können. Insbesondere kann hierzu die Krümmung des adaptiven Spiegels verändert werden, wenn dieser an seiner Rückseite mit einer Flüssigkeit, z.B. mit Wasser, beaufschlagt ist, sodass sich die Krümmung des Spiegels in Abhängigkeit vom Wasserdruck verändert. Durch die Steuerung des Wasserdrucks kann in diesem Fall eine durch Temperaturveränderungen in dem optischen Element hervorgerufene Fokuslagenverschiebung kompensiert werden.

Die Erfindung ist auch realisiert in einem Verfahren der eingangs genannten Art, umfassend die Schritte: Erzeugen von Messstrahlung und Aussenden der Messstrahlung auf das zu überwachende optische Element, Detektieren zumindest eines Teils der durch das optische Element hindurch getretenen Messstrahlung, und Überwachen einer der Intensität der detektierten Messstrahlung zugeordneten Temperatur und/oder temperaturabhängigen Kenngröße in einem Durchtrittsbereich der Messstrahlung anhand einer vorgegebenen, auf der temperaturabhängigen Absorption des transmissiven oder teiltransmissiven optischen Elements in dem Durchtrittsbereich beruhenden Beziehung zwischen der Intensität der detektierten Messstrahlung und der Temperatur und/oder der temperaturabhängigen Kenngröße in dem Durchtrittsbereich, wobei eine Messwellenlänge λ_{M} oder ein Messwellenlängenbereich λ_{M} ± Δλ für die Messstrahlung gewählt wird, welche bzw. welcher nicht mit der Laserwellenlänge λ_{L} übereinstimmt.

Auch beim erfindungsgemäßen Verfahren kann die temperaturabhängige Absorption bzw. Transmission des optischen Elements in dem Durchtrittsbereich, welche sich in einer Änderung der Intensität der detektierten Messstrahlung ausdrückt, zur Überwachung der Temperatur und/oder zur Überwachung weiterer temperaturabhängiger Kenngrößen des optischen Elements herangezogen werden. Vorteilhafte Varianten des Verfahrens sind in den Ansprüchen angegeben, bezüglich der mit diesen Varianten verbundenen Vorteile sei auf die obige Darstellung im Zusammenhang mit der Vorrichtung zur Überwachung der Temperatur verwiesen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen CO₂-Gaslaser mit einem gefalteten Laserresonator,
- Fig. 2: einen CO₂-Gaslaser mit einer externen Strahlführung und einem Bearbeitungskopf,
- Fign. 3a, b: eine erste Ausführungsform der erfindungsgemäßen Vorrichtung zur Überwachung der Temperatur des Auskoppelspiegels von Fig. 1 mit einfacher bzw. zweifacher radialer Durchleuchtung,
- Fig. 4a: eine zweite Ausführungsform der erfindungsgemäßen Vorrichtung zur axialen Durchleuchtung des optischen Elementes, und
- Fig. 4b: eine dritte Ausführungsform der erfindungsgemäßen Vorrichtung mit einem Strahlteiler und zwei Detektoren sowie einer Regelungseinheit zur Temperaturregelung des optischen Elements.

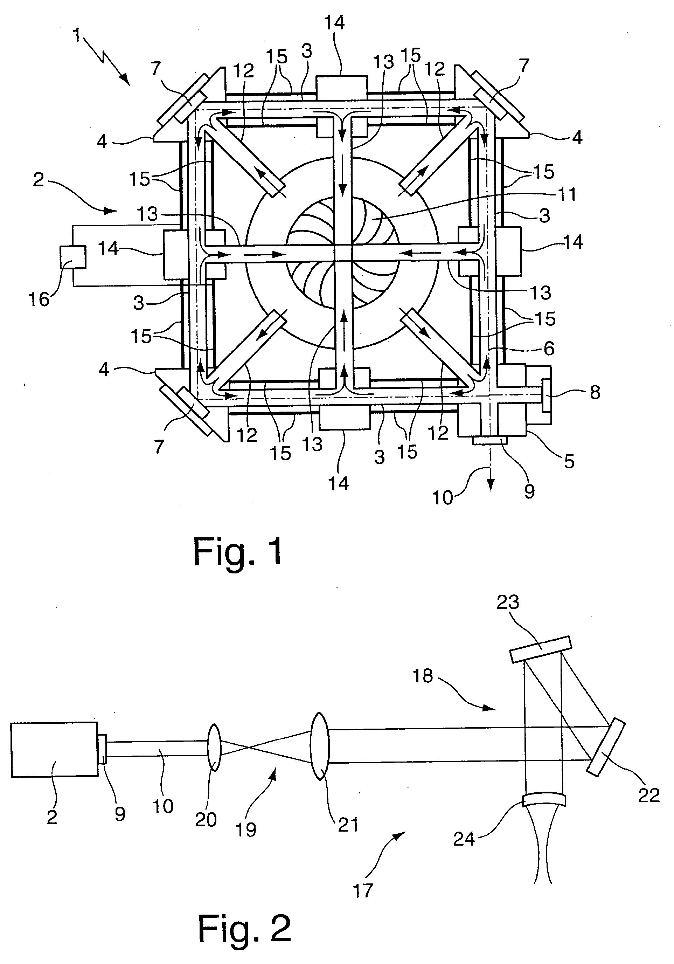

Der in **Fig. 1** gezeigte CO₂-Gaslaser **1** weist einen quadratisch gefalteten Laserresonator **2** mit vier sich aneinander anschließenden Laserentladungsrohren **3** auf, die über Eckgehäuse **4, 5** miteinander verbunden sind. Ein in Richtung der Achsen der Laserentladungsrohre 3 verlaufender Laserstrahl **6** ist strichpunktiert dargestellt. Umlenkspiegel **7** in den Eckgehäusen 4 dienen der Umlenkung des Laserstrahls 6 um jeweils 90°. Im Eckgehäuse 5 sind ein Rückspiegel **8** und ein teiltransmissiver Auskoppelspiegel **9** angeordnet. Der Rückspiegel 8 ist hochreflektierend ausgebildet und reflektiert den Laserstrahl 6 um 180°, so dass die Laserentladungsrohre 3 in entgegen gesetzter Richtung erneut durchlaufen werden. Ein Teil des Laserstrahles 6 wird an dem teiltransmissiven Auskoppelspiegel 9 aus dem Laserresonator 2 ausgekoppelt, der andere Teil verbleibt im Laserresonator 2 und durchläuft die Laserentladungsrohre 3 erneut. Der über den Auskoppelspiegel 9 aus dem Laserresonator 2 ausgekoppelte Laserstrahl ist mit **10** bezeichnet. Im Zentrum des gefalteten Laserresonators 2 ist als Druckquelle für Lasergas ein Radialgebläse **11** angeordnet, das über Zufuhrleitungen **12** für Lasergas mit den Eckgehäusen 4, 5 in Verbindung steht. Absaugleitungen **13** verlaufen zwischen Absauggehäusen **14** und dem Radialgebläse 11. Die Strömungsrichtung des Lasergases im Innern der Laserentladungsrohre 3 sowie in den Zufuhr- und Absaugleitungen 12, 13 ist durch Pfeile veranschaulicht. Die Anregung des Lasergases erfolgt über Elektroden **15,** die benachbart zu den Laserentladungsrohren 3 angeordnet und mit einem HF-Generator **16** verbunden sind.

Damit der aus dem Laserresonator 2 ausgekoppelte Laserstrahl 10 als Bearbeitungswerkzeug eingesetzt werden kann, wird der Laserstrahl 10 wie in **Fig. 2** gezeigt in einer externen Strahlführung **17** über reflektierende und transmissive optische Elemente, wie z.B. Spiegel und Linsen, vom Laserresonator 2 zu einem Bearbeitungskopf **18** geführt, in welchem eine Fokussierung des Laserstrahls 10 erfolgt. Der ausgekoppelte Laserstrahl 10 wird über ein Strahlteleskop **19,** das als Linsenteleskop mit zwei Linsen **20, 21** ausgebildet ist, auf einen gewünschten Strahldurchmesser aufgeweitet und von einem Umlenkspiegel **22** zum Bearbeitungskopf 18 umgelenkt. Der Bearbeitungskopf 18 kann wie in Fig. 2 gezeigt als Linsenkopf ausgebildet sein und umfasst in diesem Fall einen Umlenkspiegel **23** und eine Fokussierlinse **24,** die den Laserstrahl auf einen für die Bearbeitung geforderten Strahldurchmesser fokussiert. Alternativ kann der Bearbeitungskopf 18 als Spiegelkopf mit einem Fokussierspiegel ausgebildet sein, der den Laserstrahl in Richtung Werkstück ablenkt und auf den geforderten Strahldurchmesser fokussiert (nicht gezeigt).

An dem Auskoppelspiegel 9 des Laserresonators 2 von Fig. 1 trifft der im Laserresonator 2 erzeugte Laserstrahl 10 auf eine erste optische Oberfläche des Auskoppelspiegels 9 auf, an der ein Teil des Laserstrahls 10, z.B. 30 %, transmittiert und die übrigen ca. 70 % reflektiert werden, wobei ein geringer Teil auch absorbiert wird. Um das Hindurchtreten des Laserstrahls 10 durch den Auskoppelspiegel 9 zu ermöglichen, besteht dessen Grundmaterial aus bei der Laserwellenlänge λ_{L} von 10,6 µm transparentem Zinkselenid. Der Laserstrahl 10 weist im Bereich des Auskoppelspiegels einen verhältnismäßig geringen Strahlquerschnitt auf, weshalb sich eine besonders hohe Leistungsdichte pro Flächenelement von mehr als 1 kW/cm² ergibt, die zu einer besonders starken thermischen Beanspruchung des Grundmaterials des Auskoppelspiegels 9 im Durchtrittsbereich der Laserstrahlung 10 führt, weshalb dessen Temperaturverhalten zur Vermeidung von Beschädigungen durch zu große thermische Spannungen und/oder zu hohe Temperaturen überwacht werden sollte.

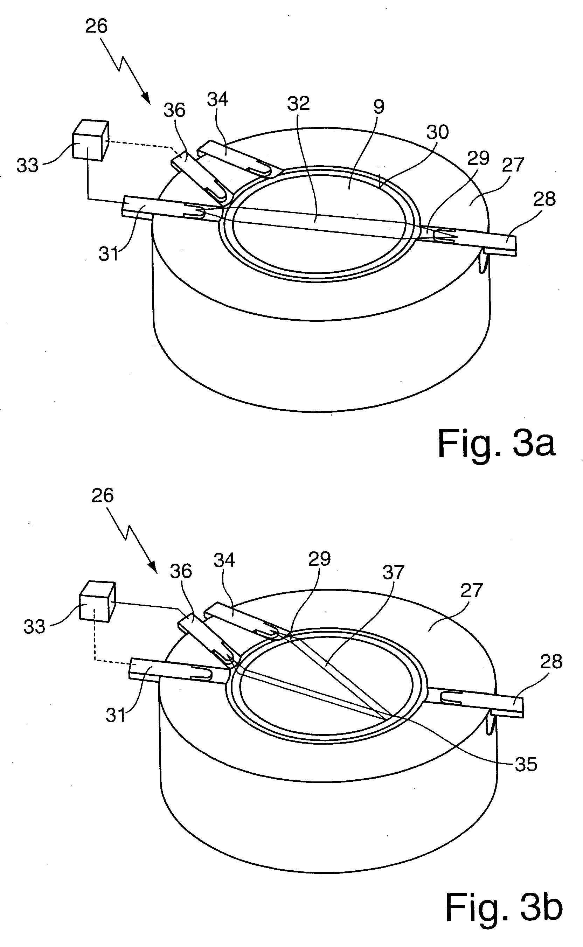

Eine hierzu geeignete, in einer Halterung **27** für den Auskoppelspiegel 9 integrierte Überwachungsvorrichtung **26** ist in **Fign. 3a,b** gezeigt. Die Überwachungsvorrichtung 26 weist eine in der Halterung 27 integrierte Messlichtquelle **28** zum Erzeugen und Aussenden von Messstrahlung **29** auf eine Seitenfläche **30** des Auskoppelspiegels 9 sowie einen der Messlichtquelle 28 diametral gegenüberliegend in der Halterung 27 integrierten Detektor **31** auf, welcher die Intensität der durch den Auskoppelspiegel 9 in einem ersten Durchtrittsbereich **32** hindurch getretenen Messstrahlung 29 detektiert und mit einer Auswerteeinrichtung **33** in Verbindung steht. Die detektierte Intensität der Messstrahlung 29 ist hierbei proportional zur Transmission des Auskoppelspiegels 9 in dem ersten Durchtrittsbereich 32, welche wiederum von der Temperatur des Grundmaterials des Auskoppelspiegels 9 abhängig ist. Aus der Intensität der Messstrahlung 29 kann daher auf die Temperatur und/oder auf weitere temperaturabhängige Kenngrößen in dem ersten Durchtrittsbereich 32 geschlossen werden. Hierzu ist in der Auswerteeinrichtung 33 eine Beziehung zwischen der Intensität der Messstrahlung 29 und der Temperatur in dem ersten Durchtrittsbereich 32 und/oder einer temperaturabhängigen Kenngröße wie Brechungsindex oder Wärmeleitfähigkeit z.B. in Form einer Tabelle gespeichert. Eine solche Beziehung kann mit Hilfe von an dem Auskoppelspiegel 9 vorgenommenen Kalibrationsmessungen oder aufgrund von Berechnungen oder Messungen des temperaturabhängigen Absorptionsverhaltens des Grundmaterials des Auskoppelspiegels 9 abgeleitet worden sein. Weicht die auf oben beschriebene Weise ermittelte Kenngröße von einer Sollgröße ab, kann eine Korrektur vorgenommen werden.

Durch die Anordnung der Messlichtquelle 28 und des Detektors 31 an diametral gegenüberliegenden Stellen der Seitenfläche 30 ist die Durchtrittslänge der Messstrahlung 29 durch den Auskoppelspiegel 9 und damit die Absorption maximiert, sodass eine möglichst große Sensitivität der Überwachungsvorrichtung 26 auf Temperaturänderungen erreicht werden kann. Um die Durchtrittslänge und damit die Sensitivität der Vorrichtung 26 weiter zu steigern, kann, wie in Fig. 3b gezeigt, von einer zweiten Messlichtquelle **34** erzeugte Messstrahlung 29 auch nach dem Eintritt in den Auskoppelspiegel 9 an einer Stelle **35** der Seitenfläche 30 reflektiert werden und dessen Intensität in einem zweiten Detektor **36** detektiert werden, der benachbart zur zweiten Messlichtquelle 34 in der Halterung 27 integriert ist. Mit der in Fig. 3b gezeigten Anordnung wird ein zweiter Durchtrittsbereich **37** für die Messstrahlung 29 erzeugt, welcher eine Durchtrittslänge aufweist, die fast doppelt so groß ist wie die Durchtrittslänge des ersten Durchtrittsbereichs 32 von Fig. 3a und an der ebenfalls eine Auswertung auf die oben beschriebene Weise durchgeführt werden kann.

Durch Vergleich der von dem ersten Detektor 31 detektierten Intensität der in dem ersten Durchtrittsbereich 32 durch den Auskoppelspiegel 9 hindurch getretenen Messstrahlung 29 mit der Intensität von in dem zweiten Durchtrittsbereich 37 durch den Auskoppelspiegel 9 hindurch getretener Messstrahlung 29 kann - unter Berücksichtigung der unterschiedlichen Durchtrittslängen - ein Temperaturgradient und/oder ein Gradient einer temperaturabhängigen Kenngröße in dem Auskoppelspiegel 9 ermittelt werden. Aus dem Brechungsindexgradienten lassen sich Schlussfolgerungen über ggf. auftretende ungewollte Veränderungen des Strahldurchmessers des Laserstrahls 10 nach dem Durchtritt durch den Auskoppelspiegel 9 treffen. Es versteht sich, dass zur Bestimmung eines solchen Gradienten sowohl die erste Messlichtquelle 28 als auch die zweite Messlichtquelle 34 gleichzeitig betrieben werden können.

Zusätzlich zur Steigerung der Sensitivität der Überwachungsvorrichtung 26 durch das Vorsehen einer besonders langen Durchtrittslänge kann diese auch gesteigert werden, indem eine Messwellenlänge λ_{M} der Messtrahlung 29 derart gewählt wird, dass eine Temperaturänderung im Grundmaterial des Auskoppelspiegels 9 zu einer besonders starken Änderung der Intensität der detektierten Messstrahlung 29 führt. Zu diesem Zweck sind die Messlichtquellen 28, 36 als Laserdioden ausgelegt, welche Messstrahlung bei einer Messwellenlänge λ_{M} von 532 nm erzeugen, die in der Nähe einer Absorptionskante von Zinkselenid bei λ_{MAX} =520 nm liegen, an der die Änderung der Transmission bei diesem Material maximal ist. Es versteht sich, dass bei Verwendung optischer Elemente aus anderen Materialien die Messwellenlänge λ_{M} der Messstrahlung an die jeweilige Wellenlänge der maximalen Transmissionsänderung geeignet angepasst werden muss. Eine solche Anpassung kann auch erforderlich sein, wenn die Messung durch eine Antireflex-Beschichtung an einer Oberfläche des optischen Elements hindurch erfolgt, da diese die Transmission in Abhängigkeit von der Wellenlänge verändern kann.

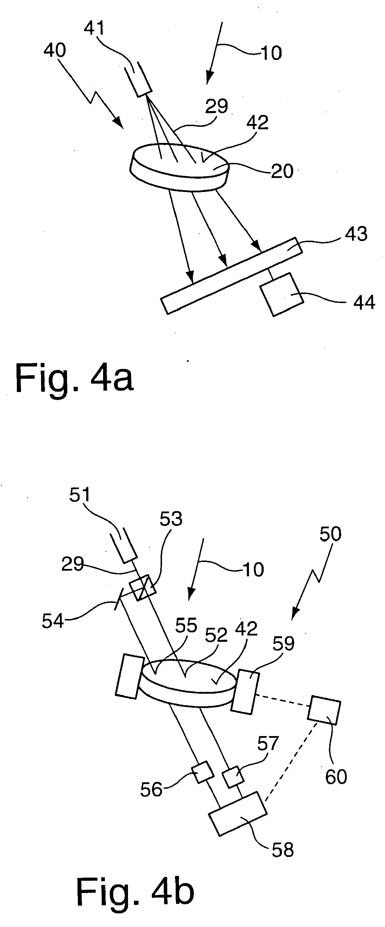

Neben der in Fign. 3a,b gezeigten radialen Durchleuchtung des Auskoppelspiegels 9 ist es auch möglich, eine axiale Durchleuchtung von optischen Elementen durchzuführen, wie in **Fig. 4a,b** beispielhaft anhand der ersten Linse 20 der Teleskopanordnung 19 von Fig. 2 gezeigt ist.

In Fig. 4a ist eine Vorrichtung **40** zur Temperaturüberwachung gezeigt, welche eine Messlichtquelle **41** aufweist, die Messstrahlung 29 in einem divergenten Bündel auf eine optische Oberfläche **42** der Linse 20 auftreffen lässt. Die durch die Linse 20 hindurch getretene Messstrahlung 29 wird von einer CCD-Kamera als Detektor **43** detektiert und deren Strahlungsintensität von einer Auswerteeinrichtung **44** zur Überwachung der Temperatur ausgewertet. Die Überwachungsvorrichtung 40 erlaubt eine solche Überwachung der Linse 20 über einen Großteil des vom Laserstrahl 10 durchdrungenen Bereichs. Durch die CCD-Kamera als ortsabhängigem Detektor 43 ist hierbei eine ortsaufgelöste Bestimmung der Temperatur oder einer temperaturabhängigen Kenngröße der Linse 20 an einer Vielzahl von Feldpunkten als integrale Information über die Durchtrittslänge und damit auch die Bestimmung von Temperaturgradienten möglich.

Eine weitere Überwachungsvorrichtung **50** zur Temperaturüberwachung der Linse 20 mittels einer axialen Durchleuchtung ist in Fig. 4b dargestellt. Dort ist eine Messlichtquelle **51** vorgesehen, welche gerichtete Messstrahlung 29 erzeugt, von der ein erster Teil an einem ersten Punkt **52** auf die Linse 20 eingestrahlt wird. An einer Strahlteilereinrichtung **53** wird ein zweiter Teil der Messstrahlung 29 bspw. durch Polarisationsselektion ausgekoppelt und über einen Umlenkspiegel **54** parallel zum ersten Teil der Messstrahlung 29 auf einen zweiten Punkt **55** der Oberfläche 42 der Linse 20 eingestrahlt. Die jeweils an den beiden Punkten 52, 55 auf die Linse 20 auftreffenden Teile der Messstrahlung 29 werden in zwei für die Detektion des jeweiligen Teils der Messstrahlung 29 vorgesehenen Detektoren **56, 57** detektiert und in einer Auswerteeinrichtung **58** zur Temperaturüberwachung ausgewertet. Durch Vergleich der von den Detektoren 56, 57 gemessenen Intensität kann wie oben beschrieben ein Temperaturgradient oder Gradient einer temperaturabhängigen Kenngröße (z.B. Brechungsindexgradient) in der Linse 20 ermittelt und bei Überschreiten eines Schwellwerts können Gegenmaßnahmen eingeleitet werden, um eine zu große Änderung der Brechungseigenschaften der Linse 20 zu verhindern.

Hierzu steht eine am Außenrand der Linse 20 angebrachte, umlaufende Kühleinrichtung **59,** in der eine Kühlflüssigkeit durch (nicht gezeigte) Kühlkanäle geführt wird, mit einer Regeleinrichtung **60** in Verbindung, welche die Informationen der Auswerteeinrichtung 58 über die temperaturabhängigen Kenngrößen verwendet, um die Temperatur der Linse 20 zu regeln und dadurch deren Kenngrößen zu optimieren. Die Überwachungsvorrichtung 50 von Fig. 4b kann durch den Verzicht auf einen Flächendetektor platzsparender ausgelegt werden als die in Fig. 4a gezeigte Überwachungsvorrichtung 40 und eignet sich daher beispielsweise besonders zur Integration in den Bearbeitungskopf 18 von Fig. 3a für die Überwachung der Fokussierlinse 24.

Neben der Regelung der temperaturabhängigen Kenngrößen unmittelbar an der Linse 20 ist es auch möglich, die durch deren Änderung in dem Strahlführungssystem 17 hervorgerufenen Effekte, z.B. die Veränderung der Fokuslage des Laserstrahls 10, an anderen optischen Elementen zu kompensieren. Hierzu kann bspw. der Umlenkspiegel 23 adaptiv ausgebildet und von der Rückseite mit Kühlwasser beaufschlagt sein, sodass er seine Krümmung und damit seine Fokussiereigenschaften in Abhängigkeit vom Kühlwasserdruck verändert. Mittels einer (nicht gezeigten) Regelungseinheit, welche den Kühlwasserdruck steuert, kann hierdurch eine Fokuslagenverschiebung durch die unterschiedlich erwärmte Linse 20 kompensiert werden. Selbstverständlich ist eine Kompensation der temperaturabhängigen Veränderung der Fokuslage auch auf andere Weise möglich, z.B. indem die Fokuslage beeinflussende optische Elemente wie die zweite Linse 21 der Teleskopanordnung 19 oder auch die Linse 20 selbst entlang der Ausbreitungsrichtung des Laserstrahls 10 verschoben werden. Zur Regelung der Fokuslage bietet es sich insbesondere an, die temperaturabhängigen Eigenschaften der Fokussierlinse 24 zu überwachen und ggf. auch diese mittels geeigneter Bewegungseinheiten in Ausbreitungsrichtung des Laserstrahls 10 zu verschieben.

Es versteht sich, dass die Überwachungsvorrichtungen 26, 40, 50 nicht nur zur Überwachung des Auskoppelspiegels 9 bzw. der Linse 20 der Teleskopanordnung 19, sondern auch zur Überwachung anderer transmissiver oder teiltransmissiver optischer Elemente verwendet werden können, wobei selbstverständlich an ein- und demselben optischen Element auch eine axiale und radiale Durchleuchtung in Kombination vorgenommen werden kann. Bei Verwendung der oben beschriebenen oder für den entsprechenden Anwendungsfall geeignet abgewandelten Überwachungsvorrichtungen kann quasi instantan auf Temperaturveränderungen und/oder Veränderungen temperaturabhängiger Kenngrößen reagiert werden. Bei der Temperaturüberwachung von optischen Elementen, die in Strahlführungssystemen von Hochleistungs-Laseranlagen vorgesehenen sind, kann hierdurch die Qualität bei der Laserbearbeitung gesteigert werden.

## Patentansprüche

1. Anordnung, umfassend:
eine Laserstrahlquelle (2) zur Erzeugung eines Laserstrahls (10) mit einer Laserwellenlänge λ_{L} im infraroten Wellenlängenbereich, bevorzugt von mehr als 2 µm, insbesondere bei λ_{L} = 10,6 µm, und bevorzugt bei einer Leistungsdichte von 1 kW/cm² oder darüber,
ein im Strahlengang des Laserstrahls (10) angeordnetes, für Strahlung bei der Laserwellenlänge λ_{L} im Infrarot-Bereich transmissives oder teiltransmissives optisches Element (9, 20), sowie
eine Vorrichtung (26, 40, 50) zum Überwachen der Temperatur und/oder einer temperaturabhängigen Kenngröße, insbesondere des Brechungsindex oder der Wärmeleitfähigkeit, des optischen Elements (9, 20), die Vorrichtung (26, 40, 50) umfassend:
- mindestens eine Messlichtquelle (28, 34; 41; 51) zum Erzeugen und Aussenden von Messstrahlung (29) auf das optische Element (9, 20),
- mindestens einen Detektor (31, 36; 43; 56, 57) zum Detektieren zumindest eines Teils der durch das optische Element (9, 20) hindurch getretenen Messstrahlung (29), sowie
- eine mit dem Detektor (31, 36; 43; 56, 57) in Verbindung stehende Auswerteeinrichtung (33; 44; 58), welche die der Intensität der detektierten Messstrahlung (29) zugeordnete Temperatur und/oder temperaturabhängige Kenngröße in einem Durchtrittsbereich (32, 37) der Messstrahlung (29) anhand einer vorgegebenen, auf der temperaturabhängigen Absorption des transmissiven oder teiltransmissiven optischen Elements (9, 20) in dem Durchtrittsbereich (32, 37) beruhenden Beziehung zwischen der Intensität der detektierten Messstrahlung (29) und der Temperatur und/oder der temperaturabhängigen Kenngröße in dem Durchtrittsbereich (32, 37) überwacht,
wobei die mindestens eine Messlichtquelle (28, 34; 41; 51) zur Erzeugung von Messstrahlung bei einer Messwellenlänge λ_{M} oder in einem Messwellenlängenbereich λ_{M} ± Δλ ausgelegt ist, welche bzw. welcher sich von der Laserwellenlänge λ_{L} unterscheidet.

2. Anordnung nach Anspruch 1, bei welcher die mindestens eine Messlichtquelle (28, 34; 41; 51) zur Erzeugung von Messstrahlung bei einer Messwellenlänge λ_{M} ausgelegt ist, bei der eine relative Abweichung |λ_{M} - λₘₐₓ|/ λₘₐₓ zu einer Wellenlänge λₘₐₓ, bei der die Änderung der Transmission des optischen Elements (9, 20) in Abhängigkeit von der Temperatur maximal ist, bei nicht mehr als 10 %, bevorzugt bei nicht mehr als 5 % liegt.

3. Anordnung nach Anspruch 1, bei welcher die mindestens eine Messlichtquelle (28, 34; 41; 51) zur Erzeugung von Messstrahlung in einem Messwellenlängenbereich λ_{M} ± Δλ ausgelegt ist, wobei dieser Bereich von einer Wellenlänge λₘₐₓ, bei der die Änderung der Transmission des optischen Elements (9, 20) in Abhängigkeit von der Temperatur maximal ist, um nicht mehr als 10 %, bevorzugt um nicht mehr als 5 %, abweicht.

4. Anordnung nach einem der vorhergehenden Ansprüche, bei welcher zur Temperaturüberwachung des optischen Elements (9, 20), welches zumindest im Durchtrittsbereich (32, 37) der Messstrahlung (29) aus Zinkselenid besteht, die Messlichtquelle zur Erzeugung von Messstrahlung bei einer Messwellenlänge λ_{M} zwischen 510 nm und 535 nm, bevorzugt bei 532 nm, oder in einem Messwellenlängenbereich λ_{M} ± Δλ im Bereich 520 nm ± 52 nm, bevorzugt 520 nm ± 26 nm, ausgelegt ist.

5. Anordnung nach einem der vorhergehenden Ansprüche, bei welcher mindestens eine Messlichtquelle (28, 34) Messstrahlung (29) auf eine nicht im Strahlengang des Laserstrahls angeordnete Seitenfläche (30) des optischen Elements (9) aussendet.

6. Anordnung nach einem der vorhergehenden Ansprüche, weiter umfassend eine Halterung (27) für das optische Element (9), in welcher mindestens eine Messlichtquelle (28, 34) und/oder mindestens ein Detektor (31, 36) integriert sind.

7. Anordnung nach einem der vorhergehenden Ansprüche, bei welcher mindestens eine Messlichtquelle (41; 51) Messstrahlung (29) auf eine zumindest teilweise im Strahlengang des Laserstrahls (10) angeordnete optische Oberfläche (42) des optischen Elements (20) aussendet.

8. Anordnung nach einem der vorhergehenden Ansprüche, bei der mindestens eine weitere Messlichtquelle und/oder mindestens eine Strahlteilereinrichtung (53) für das Licht der Messlichtquelle(n) vorgesehen ist/sind, um Messstrahlung (29) gerichtet an mindestens zwei Punkte (52, 55) einer Oberfläche (42) des optischen Elements (20) auszusenden.

9. Anordnung nach einem der vorhergehenden Ansprüche, bei welcher mindestens eine Messlichtquelle (41) zur Erzeugung von Messstrahlung in einem divergierenden Lichtbündel ausgelegt ist.

10. Anordnung nach einem der vorhergehenden Ansprüche, bei welcher mindestens ein Detektor (43) ein Flächendetektor, bevorzugt eine CCD-Kamera ist.

11. Anordnung nach einem der vorhergehenden Ansprüche, bei welcher die Auswerteeinrichtung (33; 44; 58) ausgelegt ist, durch Vergleich der Intensität von in einem ersten Durchtrittsbereich (32) durch das optische Element (9) hindurch getretener Messstrahlung (29) mit der Intensität von in einem zweiten Durchtrittsbereich (37) durch das optische Element (9) hindurch getretener Messstrahlung einen Temperaturgradienten und/oder einen Gradienten einer temperaturabhängigen Kenngröße des optischen Elements (9) zu ermitteln.

12. Anordnung nach einem der vorhergehenden Ansprüche, bei welcher die Vorrichtung (26, 40, 50) eine Regeleinrichtung (60) zur Temperaturregelung des optischen Elements (20) auf eine vorgebbare Betriebstemperatur und eine von der Regeleinrichtung (60) gesteuerte Kühleinrichtung (59) zum Kühlen des optischen Elements (20) aufweist.

13. Anordnung nach einem der vorhergehenden Ansprüche, bei welcher die Vorrichtung (26, 40, 50) eine Regeleinrichtung zur Regelung der Fokuslage des mittels mindestens eines adaptiven Spiegels (23) fokussierbaren Laserstrahls (10) vorgesehen ist, wobei zur Regelung der Fokuslage die fokussierenden Eigenschaften des adaptiven Spiegels (23) von der Regeleinrichtung gesteuert werden können.

14. Verfahren zum Überwachen der Temperatur und/oder einer temperaturabhängigen Kenngröße, insbesondere des Brechungsindex oder der Wärmeleitfähigkeit, eines im Strahlengang eines Laserstrahls (10) mit einer Laserwellenlänge λ_{L} im infraroten Wellenlängenbereich, bevorzugt von mehr als 2 µm, insbesondere bei λ_{L} = 10,6 µm, und bevorzugt bei einer Leistungsdichte von 1 kW/cm² oder darüber angeordneten, für Strahlung bei einer Laserwellenlänge λ_{L} im Infrarot-Bereich transmissiven oder teiltransmissiven optischen Elements (9; 20), umfassend die Schritte:
- Erzeugen von Messstrahlung und Aussenden der Messstrahlung auf das optische Element (9; 20),
- Detektieren zumindest eines Teils der durch das optische Element (9; 20) hindurch getretenen Messstrahlung (29), und
- Überwachen einer der Intensität der detektierten Messstrahlung (29) zugeordneten Temperatur und/oder temperaturabhängigen Kenngröße in einem Durchtrittsbereich (32, 37) der Messstrahlung (29) anhand einer vorgegebenen, auf der temperaturabhängigen Absorption des transmissiven oder teiltransmissiven optischen Elements (9, 20) in dem Durchtrittsbereich (32, 37) beruhenden Beziehung zwischen der Intensität der detektierten Messstrahlung (29) und der Temperatur und/oder der temperaturabhängigen Kenngröße in dem Durchtrittsbereich (32, 37), wobei eine Messwellenlänge λ_{M} oder ein Messwellenlängenbereich λ_{M} ± Δλ für die Messstrahlung (29) gewählt wird, welche bzw. welcher nicht mit der Laserwellenlänge λ_{L} übereinstimmt.

15. Verfahren nach Anspruch 14, bei dem eine Messwellenlänge λ_{M} für die Messstrahlung (29) gewählt wird, bei der eine relative Abweichung |λ_{M} - λₘₐₓ|/ λₘₐₓ zu einer Wellenlänge λₘₐₓ, bei der die Änderung der Transmission des optischen Elements (9, 20) in Abhängigkeit von der Temperatur maximal ist, bei nicht mehr als 10 %, bevorzugt bei nicht mehr als 5 % liegt.

16. Verfahren nach Anspruch 14, bei dem ein Messwellenlängenbereich λ_{M} ± Δλ für die Messstrahlung (29) gewählt wird, wobei dieser Bereich von einer Wellenlänge λₘₐₓ, bei der die Änderung der Transmission des optischen Elements (9, 20) in Abhängigkeit von der Temperatur maximal ist, um nicht mehr als 10 %, bevorzugt nicht mehr als 5 %, abweicht.

## Claims

1. Arrangement comprising:
a laser beam source (2) for producing a laser beam (10) having a laser wavelength λ_{L} in the infrared wavelength range, preferably of more than 2 µm, especially at λ_{L} = 10.6 µm, and preferably at a power density of 1 kW/cm² or above,
an optical element (9, 20) which is arranged in the beam path of the laser beam (10) and which is transmissive or partially transmissive to radiation at a laser wavelength λ_{L} in the infrared range, as well as
an apparatus (26, 40, 50) for monitoring the temperature and/or a temperature-dependent parameter, especially the refractive index or the thermal conductivity, of the optical element (9, 20), the apparatus (26, 40, 50) comprising:
- at least one measuring light source (28, 34; 41; 51) for producing measuring radiation (29) and sending it onto the optical element (9, 20),
- at least one detector (31, 36; 43; 56, 57) for detecting at least a portion of the measuring radiation (29) that has passed through the optical element (9, 20), as well as
- an evaluating device (33; 44; 58) which is connected to the detector (31, 36; 43; 56, 57) and which monitors the temperature and/or temperature-dependent parameter, which is correlated with the intensity of the detected measuring radiation (29), in a passage region (32, 37) of the measuring radiation (29) based on a predefined relation between the intensity of the detected measuring radiation (29) and the temperature and/or the temperature-dependent parameter in the passage region (32, 37), which relation is based on the temperature-dependent absorption of the transmissive or partially transmissive optical element (9, 20) in the passage region (32, 37),
wherein the at least one measuring light source (28, 34; 41; 51) is configured to produce measuring radiation at a measuring wavelength λ_{M} or in a measuring wavelength range of λ_{M} ± Δλ that is different from the laser wavelength λ_{L}.

2. Arrangement according to claim 1, wherein the at least one measuring light source (28, 34; 41; 51) is configured to produce measuring radiation at a measuring wavelength λ_{M} at which a relative deviation |λ_{M} - λₘₐₓ)| / λₘₐₓ with respect to a wavelength λₘₐₓ, at which the change in the transmission of the optical element (9, 20) as a function of temperature is at a maximum, is not more than 10%, preferably not more than 5%.

3. Arrangement according to claim 1, wherein the at least one measuring light source (28, 34; 41; 51) is configured to produce measuring radiation in a measuring wavelength range of λ_{M} ± Δλ, wherein that range deviates from a wavelength λₘₐₓ, at which the change in the transmission of the optical element (9, 20) as a function of temperature is at a maximum, by not more than 10%, preferably by not more than 5%.

4. Arrangement according to any one of the preceding claims, wherein for monitoring the temperature of the optical element (9, 20) consisting, at least in the passage region (32, 37) of the measuring radiation (29), of zinc selenide, the measuring light source is configured to produce measuring radiation at a measuring wavelength λ_{M} of from 510 nm to 535 nm, preferably at 532 nm, or in a measuring wavelength range of λ_{M} ± Δλ in the range of 520 nm ± 52 nm, preferably 520 nm ± 26 nm.

5. Arrangement according to any one of the preceding claims, wherein at least one measuring light source (28, 34) sends measuring radiation (29) onto a lateral surface (30) of the optical element (9), which lateral surface (30) is not arranged in the beam path of the laser beam.

6. Arrangement according to any one of the preceding claims, further comprising a mounting (27) for the optical element (9), in which mounting (27) at least one measuring light source (28, 34) and/or at least one detector (31, 36) are integrated.

7. Arrangement according to any one of the preceding claims, wherein at least one measuring light source (41; 51) sends measuring radiation (29) onto an optical surface (42) of the optical element (20), which optical surface (42) is arranged at least partially in the beam path of the laser beam (10).

8. Arrangement according to any one of the preceding claims, wherein at least one further measuring light source and/or at least one beam splitting device (53) for the light of the measuring light source(s) is/are provided in order to send measuring radiation (29) in a directed way onto at least two points (52, 55) of a surface (42) of the optical element (20).

9. Arrangement according to any one of the preceding claims, wherein at least one measuring light source (41) is configured to produce measuring radiation in a divergent light beam.

10. Arrangement according to any one of the preceding claims, wherein at least one detector (43) is an area detector, preferably a CCD camera.

11. Arrangement according to any one of the preceding claims, wherein the evaluating device (33; 44; 58) is configured to determine a temperature gradient and/or a gradient of a temperature-dependent parameter of the optical element (9) by comparing the intensity of measuring radiation (29) that has passed through the optical element (9) in a first passage region (32) with the intensity of measuring radiation that has passed through the optical element (9) in a second passage region (37).

12. Arrangement according to any one of the preceding claims, wherein the apparatus (26, 40, 50) comprises a regulating device (60) for regulating the temperature of the optical element (20) to a predefinable operating temperature and a cooling device (59) for cooling the optical element (20), which is controlled by the regulating device (60).

13. Arrangement according to any one of the preceding claims, wherein the apparatus (26, 40, 50) comprises a regulating device for regulating the focal position of the laser beam (10) which may be focused by means of at least one adaptive mirror (23), wherein for regulating the focal position the focusing properties of the adaptive mirror (23) may be controlled by the regulating device.

14. A method for monitoring the temperature and/or a temperature-dependent parameter, especially the refractive index or the thermal conductivity, of an optical element (9; 20) which is arranged in the beam path of a laser beam (10) with a laser wavelength λ_{L} in the infrared wavelength range, preferably of more than 2 µm, especially at λ_{L} = 10.6 µm, and preferably at a power density of 1 kW/cm² or above, and which is transmissive or partially transmissive to radiation at a laser wavelength λ_{L} in the infrared range, comprising the steps of:
- producing measuring radiation and sending the measuring radiation onto the optical element (9; 20),
- detecting at least a portion of the measuring radiation (29) that has passed through the optical element (9; 20), and
- monitoring a temperature and/or temperature-dependent parameter, which is correlated with the intensity of the detected measuring radiation (29), in a passage region (32, 37) of the measuring radiation (29) based on a predefined relation between the intensity of the detected measuring radiation (29) and the temperature and/or the temperature-dependent parameter in the passage region (32, 37), which relation is based on the temperature-dependent absorption of the transmissive or partially transmissive optical element (9, 20) in the passage region (32, 37), wherein there is selected for the measuring radiation (29) a measuring wavelength λ_{M} or measuring wavelength range of λ_{M} ± Δλ that does not coincide with the laser wavelength λ_{L}.

15. A method according to claim 14, wherein there is selected for the measuring radiation (29) a measuring wavelength λ_{M}, at which a relative deviation |λ_{M} - λₘₐₓ| / λₘₐₓ with respect to a wavelength λₘₐₓ at which the change in the transmission of the optical element (9, 20) as a function of temperature is at a maximum, is not more than 10%, preferably not more than 5%.

16. A method according to claim 14, wherein there is selected for the measuring radiation (29) a measuring wavelength range of λ_{M} ± Δλ, wherein that range deviates from a wavelength λₘₐₓ, at which the change in the transmission of the optical element (9, 20) as a function of temperature is at a maximum, by not more than 10%, preferably by not more than 5%.

## Revendications

1. Agencement, comprenant :
une source de rayonnement laser (2) pour générer un faisceau laser (10) à une longueur d'onde laser λ_{L} dans la gamme de longueurs d'onde infrarouge, de préférence supérieure à 2 µm, en particulier à λ_{L} = 10,6 µm, et de préférence à une densité de puissance de 1 kW/cm² ou plus,
un élément optique (9, 20) disposé dans le chemin optique du faisceau laser (10), transmissif ou partiellement transmissif pour un rayonnement à la longueur d'onde laser λ_{L} dans le domaine infrarouge, ainsi que
un dispositif (26, 40, 50) pour surveiller la température et/ou une grandeur caractéristique dépendante de la température, en particulier l'indice de réfraction ou la conductibilité thermique, de l'élément optique (9, 20), le dispositif (26, 40, 50) comprenant :
- au moins une source de lumière de mesure (28, 34 ; 41 ; 51) pour générer et émettre un rayonnement de mesure (29) sur l'élément optique (9, 20),
- au moins un détecteur (31, 36 ; 43 ; 56, 57) pour détecter au moins une partie du rayonnement de mesure (29) ayant passé à travers l'élément optique (9, 20), ainsi que
- un moyen d'évaluation (33 ; 44 ; 58) relié au détecteur (31, 36 ; 43 ; 56, 57), lequel surveille la température et/ou la grandeur caractéristique dépendante de la température associée à l'intensité du rayonnement de mesure (29) détecté dans une zone de passage (32, 37) du rayonnement de mesure (29) à l'aide d'une relation prédéfinie, reposant sur l'absorption dépendante de la température de l'élément optique (9, 20) transmissif ou partiellement transmissif dans la zone de passage (32, 37), entre l'intensité du rayonnement de mesure (29) détecté et la température et/ou la grandeur caractéristique dépendante de la température dans la zone de passage (32, 37),
ladite au moins une source de lumière de mesure (28, 34 ; 41 ; 51) étant conçue pour générer un rayonnement de mesure à une longueur d'onde de mesure λ_{M} ou dans une gamme de longueurs d'onde de mesure λ_{M} ± Δλ qui diffère de la longueur d'onde laser λ_{L}.

2. Agencement selon la revendication 1, dans lequel ladite au moins une source de lumière de mesure (28, 34 ; 41; 51) est conçue pour générer un rayonnement de mesure à une longueur d'onde de mesure λ_{M}, à laquelle un écart relatif |λ_{M} - λₘₐₓ|/ λₘₐₓ par rapport à une longueur d'onde λₘₐₓ, à laquelle la modification de la transmission de l'élément optique (9, 20) en fonction de la température est maximale, n'est pas supérieur à 10 %, de préférence pas supérieur à 5 %.

3. Agencement selon la revendication 1, dans lequel ladite au moins une source de lumière de mesure (28, 34 ; 41 ; 51) est conçue pour générer un rayonnement de mesure dans une gamme de longueurs d'onde de mesure λ_{M} ± Δλ, cette gamme ne s'écartant pas de plus de 10 %, de préférence pas de plus de 5 %, d'une longueur d'onde λₘₐₓ à laquelle la modification de la transmission de l'élément optique (9, 20) en fonction de la température est maximale.

4. Agencement selon l'une des revendications précédentes, dans lequel, pour surveiller la température de l'élément optique (9, 20), lequel est constitué de séléniure de zinc au moins dans la zone de passage (32, 37) du rayonnement de mesure (29), la source de lumière de mesure est conçue pour générer un rayonnement de mesure à une longueur d'onde de mesure λ_{M} entre 510 nm et 535 nm, de préférence à 532 nm, ou dans une gamme de longueurs d'onde de mesure λ_{M} ± Δλ, dans la plage 520 nm ± 52 nm, de préférence 520 nm ± 26 nm.

5. Agencement selon l'une des revendications précédentes, dans lequel au moins une source de lumière de mesure (28, 34) émet un rayonnement de mesure (29) sur une surface latérale (30) de l'élément optique (9) non disposée dans le chemin optique du faisceau laser.

6. Agencement selon l'une des revendications précédentes, comprenant en outre un support (27) pour l'élément optique (9), dans lequel au moins une source de lumière de mesure (28, 34) et/ou au moins un détecteur (31, 36) sont intégrés.

7. Agencement selon l'une des revendications précédentes, dans lequel au moins une source de lumière de mesure (41 ; 51) émet un rayonnement de mesure (29) sur une surface optique (42) de l'élément optique (20) disposée au moins partiellement dans le chemin optique du faisceau laser (10).

8. Agencement selon l'une des revendications précédentes, dans lequel au moins une autre source de lumière de mesure et/ou au moins un moyen diviseur de faisceau (53) pour la lumière de la(des) source(s) de lumière de mesure est/sont prévu(s), pour émettre un rayonnement de mesure (29) dirigé sur au moins deux points (52, 55) d'une surface (42) de l'élément optique (20).

9. Agencement selon l'une des revendications précédentes, dans lequel au moins une source de lumière de mesure (41) est conçue pour générer un rayonnement de mesure dans un faisceau de lumière divergent.

10. Agencement selon l'une des revendications précédentes, dans lequel au moins un détecteur (43) est un détecteur plan, de préférence une caméra CCD.

11. Agencement selon l'une des revendications précédentes, dans lequel le moyen d'évaluation (33 ; 44 ; 58) est conçu pour déterminer un gradient de température et/ou un gradient d'une grandeur caractéristique dépendante de la température de l'élément optique (9) par comparaison de l'intensité d'un rayonnement de mesure (29) ayant passé à travers l'élément optique (9) dans une première zone de passage (32) avec l'intensité d'un rayonnement de mesure (29) ayant passé à travers l'élément optique (9) dans une deuxième zone de passage (37).

12. Agencement selon l'une des revendications précédentes, dans lequel le dispositif (26, 40, 50) présente un moyen de régulation (60) pour réguler la température de l'élément optique (20) à une température de service prédéfinissable et un moyen de refroidissement (59) commandé par le moyen de régulation (60) pour refroidir l'élément optique (20).

13. Agencement selon l'une des revendications précédentes, dans lequel le dispositif (26, 40, 50) présente un moyen de régulation pour réguler la position focale du faisceau laser (10) focalisable au moyen d'au moins un miroir adaptatif (23), les propriétés focalisantes du miroir adaptatif (23) pouvant être commandées par le moyen de régulation pour réguler la position focale.

14. Procédé de surveillance de la température et/ou d'une grandeur caractéristique dépendante de la température, en particulier de l'indice de réfraction ou de la conductibilité thermique d'un élément optique (9, 20) disposé dans le chemin optique d'un faisceau laser (10) à une longueur d'onde laser λ_{L} dans la gamme de longueurs d'onde infrarouge, de préférence supérieure à 2 µm, en particulier à λ_{L} = 10,6 µm, et de préférence à une densité de puissance de 1 kW/cm² ou plus, transmissif ou partiellement transmissif pour un rayonnement à une longueur d'onde laser λ_{L} dans le domaine infrarouge, comprenant les étapes consistant à :
- générer un rayonnement de mesure et émettre le rayonnement de mesure sur l'élément optique (9 ; 20),
- détecter au moins une partie du rayonnement de mesure (29) ayant passé à travers l'élément optique (9 ; 20), et
- surveiller une température et/ou une grandeur caractéristique dépendante de la température associée à l'intensité du rayonnement de mesure (29) détecté dans une zone de passage (32, 37) du rayonnement de mesure (29) à l'aide d'une relation prédéfinie, reposant sur l'absorption dépendante de la température de l'élément optique (9, 20) transmissif ou partiellement transmissif dans la zone de passage (32, 37), entre l'intensité du rayonnement de mesure (29) détecté et la température et/ou la grandeur caractéristique dépendante de la température dans la zone de passage (32, 37), une longueur d'onde de mesure λ_{M} ou une gamme de longueurs d'onde de mesure λ_{M} ± Δλ pour le rayonnement de mesure (29) étant choisie de façon qu'elle ne coïncide pas avec la longueur d'onde laser λ_{L}.

15. Procédé selon la revendication 14, selon lequel une longueur d'onde de mesure λ_{M} pour le rayonnement de mesure (29) est choisie de façon qu'un écart relatif |λ_{M} - λₘₐₓ| / λₘₐₓ par rapport à une longueur d'onde λₘₐₓ, à laquelle la modification de la transmission de l'élément optique (9, 20) en fonction de la température est maximale, ne soit pas supérieur à 10 %, de préférence pas supérieur à 5 %.

16. Procédé selon la revendication 14, selon lequel une gamme de longueurs d'onde de mesure λ_{M} ± Δλ pour le rayonnement de mesure (29) est choisie, cette gamme ne s'écartant pas de plus de 10 %, de préférence pas de plus de 5 %, d'une longueur d'onde λₘₐₓ à laquelle la modification de la transmission de l'élément optique (9, 20) en fonction de la température est maximale.
